# EUROPEAN PATENT APPLICATION

(11) **EP 4 818 277 A1**
(43) Date of publication of application: **07.10.2026**
(21) Application number: 26166015.3
(22) Date of filing: 19.03.2026
(51) Int. Cl.: C09D 11/322, C09D 11/38

(54) **AQUEOUS INK FOR INKJET RECORDING, INKJET RECORDING APPARATUS, AND INKJET RECORDING METHOD**

(30) Priority: 31.03.2025 JP 2025060023; 13.02.2026 JP 2026021729
(71) Applicant: BROTHER KOGYO KABUSHIKI KAISHA, Aichi-ken 467-8561 (JP)
(72) Inventor: ISOGAI, Masato, Nagoya, 467-8562 (JP); TSUZAKA, Yuka, Nagoya, 467-8562 (JP); NISHIDA, Satoshi, Nagoya, 467-8562 (JP); KAWABATA, Issei, Nagoya, 467-8562 (JP)
(74) Representative: Kuhnen & Wacker Patent- und Rechtsanwaltsbüro PartG mbB

(57) **Abstract**

An aqueous ink for inkjet recording includes water, phycocyanin, and a surfactant. The surfactant has a critical micelle concentration in water of 0.10 wt% or less.

## Description

### TECHNICAL FIELD

The disclosure herein provides a technology relating to an aqueous ink for inkjet recording, an inkjet recording apparatus, and an inkjet recording method.

### BACKGROUND ART

JP Patent Application Publication No. 2022-107267 describes an inkjet ink including only petroleum-based colorants.

### DESCRIPTION

Recently, in view of a decarbonization perspective, it is desirable to replace petroleum-based raw materials with plant derived natural raw materials for a blue colorant in an inkjet ink.

Among several natural blue colorants, phycocyanin, a water-soluble pigment, is particularly noted for its vivid blue color. However, an ejection stability of an inkjet head tends to decrease when ejecting an inkjet ink containing phycocyanin from the inkjet head.

Therefore, an object of the present disclosure is to provide an aqueous ink for inkjet recording, an inkjet recording apparatus, and an inkjet recording method, each of which uses phycocyanin as a colorant and exhibits excellent ejection stability from nozzles of an inkjet head.

In order to achieve the above object, an aqueous ink for inkjet recording according to the present disclosure includes water, phycocyanin, and a surfactant, in which the surfactant has a critical micelle concentration in water of 0.10 wt% or less.

An inkjet recording apparatus according to the present disclosure includes an inkjet head, in which the inkjet head is configured to eject the aqueous ink according to the present disclosure toward a medium.

An inkjet recording method according to the present disclosure includes ejecting the aqueous ink according to the present disclosure from an inkjet head toward a medium to record an image on the medium.

With the aqueous ink for inkjet recording according to the present disclosure, it is possible to expel an ejection stability from a plurality of nozzles of the aqueous ink for inkjet recording by using phycocyanin as a colorant.

FIG. 1 is a schematic perspective view of an example of an inkjet recording apparatus.

FIG. 2A is a table 1 that indicates aqueous ink compositions and evaluation results for Examples 1 through 10.

FIG. 2B is a table 1 that indicates aqueous ink compositions and evaluation results for Comparative Examples 1 through 3.

In the present disclosure, when multiple upper and/or lower limits are exemplified, any combination of the exemplified upper and lower limits may be used as the numerical range.

In the present disclosure, values of "weight % (hereinafter, referred to "wt%")", "content ratio (x/y) ", and "Slope value" are indicated to the second decimal place and rounded at the third decimal place. A value of "1-dot line width" is indicated to the first decimal place and rounded at the second decimal place.

Any mechanisms described in the following embodiments and examples are merely hypothetical and are not intended to limit the described mechanisms.

### Aqueous Ink for Inkjet Recording

The aqueous ink for inkjet recording (hereinafter sometimes referred to as "aqueous ink" or "ink") of the present disclosure is described below. The aqueous ink of the present disclosure is, for example, a colored aqueous ink containing a colorant described below.

The aqueous ink of the present disclosure includes water, phycocyanin, and a surfactant. The water may be ion-exchanged water, purified water, or the like.

A content of the water in a total weight of the aqueous ink is, for example, 10.00 wt% or greater and 90.00 wt% or less or 20.00 wt% or greater and 80.00 wt% or less. The content of the water may also be the balance excluding other components.

The aqueous ink of the present disclosure is a cyan ink containing at least the phycocyanin as the colorant. The aqueous ink of the present disclosure may be a cyan ink containing only the phycocyanin as the colorant. The phycocyanin is a natural pigment-protein. The phycocyanin includes phycocyanobilin as the pigment. The phycocyanin includes a hexameric disc formed by the phycocyanobilin molecules. The hexameric disc is formed by combining two trimeric discs. Each trimeric disc includes one molecule of phycocyanobilin bound to α-subunit and two molecules of phycocyanobilin bound to β-subunit. Furthermore, the hexameric disk binds to a specific protein to form a rod-like structure, resulting in a water-soluble large pigment-protein complex.

The lower limit of the content of the phycocyanin in the total weight of the aqueous ink may be 5.00 wt% or greater or 10.00 wt% or greater. The upper limit of the content of the phycocyanin may be 15.00 wt% or less or 10.00 wt% or less. The content may be 5.00 wt% or greater and 15.00 wt% or less, 5.00 wt% or greater and 10.00 wt% or less, or 10.00 wt% or greater and 15.00 wt% or less.

The aqueous ink of the present disclosure may further include, in addition to phycocyanin, at least one blue dye selected from the group consisting of gardenia blue pigment, indian indigo, and clerodendrum pigment. The aqueous ink may also include, in addition to phycocyanin, at least one red dye selected from the group consisting of gardenia red pigment, monascus, carthamus red pigment, cochineal pigment, lac dye, madder dye, capsicum pigment, annatto pigment, red radish pigment, red cabbage pigment, red rice pigment, elderberry pigment, cowberry pigment, gooseberry pigment, cranberry pigment, salmonberry pigment, perilla pigment, swainsonine blueberry pigment, strawberry pigment, dark sweet cherry pigment, cherry pigment, hibiscus pigment, huckleberry pigment, grape juice pigment, grape skin pigment, blackcurrant pigment, blackberry pigment, blueberry pigment, plum pigment, whortleberry pigment, boysenberry pigment, mulberry pigment, purple sweet potato pigment, purple corn pigment, purple yam pigment, raspberry pigment, redcurrant pigment, loganberry pigment, beet red pigment, and monascus red pigment. Furthermore, the aqueous ink may be a green or purple ink which includes, in addition to phycocyanin, at least one yellow dye selected from the group consisting of gardenia yellow pigment, safflower yellow pigment, turmeric pigment, and monascus yellow pigment as colorants.

The aqueous ink of the present disclosure may also include petroleum-derived pigments in addition to phycocyanin as colorants. By including both phycocyanin and petroleum-derived pigments as colorants, the content of petroleum-derived pigments in the aqueous ink is less than the content of petroleum-derived pigments in the aqueous ink that contains only petroleum-derived pigments.

Examples of the pigment may include carbon black, inorganic pigments, and organic pigments. Examples of carbon black include furnace black, lamp black, acetylene black, and channel black. Examples of inorganic pigments include titanium oxide, iron oxide-based inorganic pigments, and carbon black-based inorganic pigments. Examples of organic pigments include: azo pigments such as azo lakes, insoluble azo pigments, condensed azo pigments, and chelate azo pigments; polycyclic pigments such as phthalocyanine pigments, perylene pigments, perinone pigments, anthraquinone pigments, quinacridone pigments, dioxazine pigments, thioindigo pigments, isoindolinone pigments and quinophthalone pigments, dye lake pigments such as basic dye-type lake pigments and acid dye-type lake pigments; nitro pigments; nitroso pigments; aniline black daylight fluorescent pigments; and the like. Other pigments dispersible in an aqueous phase may be used. Examples of the other pigments may include: C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments. Examples of commercially available products may include "Joncryl^{®} 611," "Joncryl 60," "Joncryl 586," "Joncryl 687," "Joncryl 63," and "Joncryl HPD296" from BASF Corporation; "Disperbyk 190" and "Disperbyk 191" from BYK Chemie GmbH; "Solsperse 20000" and "Solsperse 27000" from Lubrizol Corporation; and others.

The aqueous ink of the present disclosure may include a combination of the phycocyanin and petroleum-derived dyes as the colorant. By including both the phycocyanin and the petroleum-derived dye, the content of the petroleum-derived dye in the aqueous ink is less than the content of petroleum-derived dye in the aqueous ink that contains only petroleum-derived dye.

The petroleum-derived dye is not particularly limited and may include direct dyes, acid dyes, basic dyes, and reactive dyes. Examples of the petroleum-derived dye may include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black may include C.I. Direct Black 17, 19, 32, 51, 71, 108, 146, 154, and 168. Examples of the C.I. Direct Blue may include C.I. Direct Blue 6, 22, 25, 71, 86, 90, 106, and 199. Examples of the C.I. Direct Red may include C.I. Direct Red 1, 4, 17, 28, 83, and 227. Examples of the C.I. Direct Yellow may include C.I. Direct Yellow 12, 24, 26, 86, 98, 132, 142, and 173. Examples of the C.I. Direct Orange may include C.I. Direct Orange 34, 39, 44, 46, and 60. Examples of the C.I. Direct Violet may include C.I. Direct Violet 47 and 48. Examples of the C.I. Direct Brown may include C.I. Direct Brown 109. Examples of the C.I. Direct Green may include C.I. Direct Green 59. Examples of the C.I. Acid Black may include C.I. Acid Black 2, 7, 24, 26, 31, 52, 63, 112, and 118. Examples of the C.I. Acid Blue may include C.I. Acid Blue 9, 22, 40, 59, 90, 93, 102, 104, 117, 120, 167, 229, and 234. Examples of the C.I. Acid Red may include C.I. Acid Red 1, 6, 32, 37, 51, 52, 80, 85, 87, 92, 94, 115, 180, 256, 289, 315, and 317. Examples of the C.I. Acid Yellow may include C.I. Acid Yellow 11, 17, 23, 25, 29, 42, 61, and 71. Examples of the C.I. Acid Orange may include C.I. Acid Orange 7 and 19. Examples of the C.I. Acid Violet include C.I. Acid Violet 49. Examples of the C.I. Basic Black may include C.I. Basic Black 2. Examples of the C.I. Basic Blue may include C.I. Basic Blue 1, 3, 5, 7, 9, 24, 25, 26, 28, and 29. Examples of the C.I. Basic Red may include C.I. Basic Red 1, 2, 9, 12, 13, 14, and 37. Examples of the C.I. Basic Violet may include C.I. Basic Violet 7, 14, and 27. Examples of the C.I. Food Black may include C.I. Food Black 1 and 2.

The surfactant included in the aqueous ink of the present disclosure has a critical micelle concentration (hereinafter, referred to "CMC") in water of 0.10 wt% or less. The upper limit of the CMC may be 0.05 wt% or less, or 0.02 wt% or less. The CMC refers to a minimum concentration at which the surfactant begins to form micelles in solution. Therefore, when the surfactant is contained in water, the CMC always exceeds 0 wt%.

Surfactants with low values of the CMC tend to form micelles in water even at low concentrations. As described above, phycocyanin binds to form large protein complexes. Such protein complex in the aqueous ink may cause nozzle clogging, which causes a poor ejection stability. However, micelles in the aqueous ink may act the large protein complexes to dissociate an association between the large protein complexes. Therefore, using surfactants with a low CMC with respect to the water allows a dissociation of the association with relatively small amounts of the surfactant, thereby improving the ejection stability of the aqueous ink from nozzles of the inkjet head.

According to the above principle, increasing the amount of the surfactant may seem beneficial for improving the ejection stability. However, at the time of shipment from the factory, the inkjet head and an ink flow path are filled with a filling liquid different from the ink. Before a first recording after shipping from the factory, an initial purge replaces the filling liquid with the ink by discharging the filling liquid from nozzles while introducing the ink from the ink cartridge. An ink introduction property is evaluated as an indicator of replacement efficiency from the filling liquid to the ink. Increasing the surfactant amount to enhance the ejection stability may adversely affect an ink introduction. Therefore, from the perspective of the ink introduction, a smaller amount of surfactant is preferable.

Examples of the surfactant may include Rhamnolipid, Sophorolipid, Mannosylerythritol Lipid, Trehalose Lipid, Cellobiose Lipid, Rhamnosin, Spiculisporic Acid, and Corynomycic Acid.

The surfactant may be a commercially available surfactant. Examples of the commercial available surfactant include "Genagen C 50 SG Vita," "Genagen C 70 SG Vita," and "Genagen C 100 SG Vita," from CLARIANT AG.

The surfactant may be a single surfactant or two or more types of surfactants.

The lower limit of the content of the surfactant in the total weight of the aqueous ink may be 0.01 wt% or greater, 0.10 wt% or greater, or 0.30 wt% or greater. The upper limit of the content of the surfactant may be 10.00 wt% or less, 5.00 wt% or less, 4.50 wt% or less, 3.00 wt% or less, 1.00 wt% or less, or 0.50 wt% or less. The content of the surfactant may be 0.01 wt% or greater and 10.00 wt% or less, 0.01 wt% or greater and 5.00 wt% or less, or 0.30 wt% or greater and 4.50 wt% or less.

The lower limit of the content ratio (x/y) of the phycocyanin (x) to the surfactant (y) may be 1.00 or greater, 2.00 or greater, or 2.22 or greater. The upper limit of the content ratio (x/y) may be 1000.00 or less, 100.00 or less, 33.33 or less, or 20.00 or less. The content ratio (x/y) may be 1.00 or greater and 1000.00 or less, 2.00 or greater and 1000.00 or less, or 2.22 or greater and 33.33 or less. The content ratio of 1.00 or greater may be preferable as it results in practical ink introduction. The content ratio of 1000.00 or less may be preferable as it increases the line width when recording a single dot from the inkjet head.

The aqueous ink of the present disclosure may optionally include water-soluble organic solvents, pH adjusters, viscosity modifiers, preservatives, and antifungal agents. Additionally, the aqueous ink may consist solely of plant-derived ingredients. That is, all components of the aqueous ink, excluding water, may be plant-derived.

### (Inkjet Recording Apparatus and Inkjet Recording Method)

Next, an inkjet recording apparatus and method of this disclosure are described.

The inkjet recording apparatus of the present disclosure includes an inkjet head, and the inkjet head ejects the aqueous ink of the present disclosure toward a medium. The aqueous ink in the present disclosure may be a cyan ink containing only phycocyanin as the colorant.

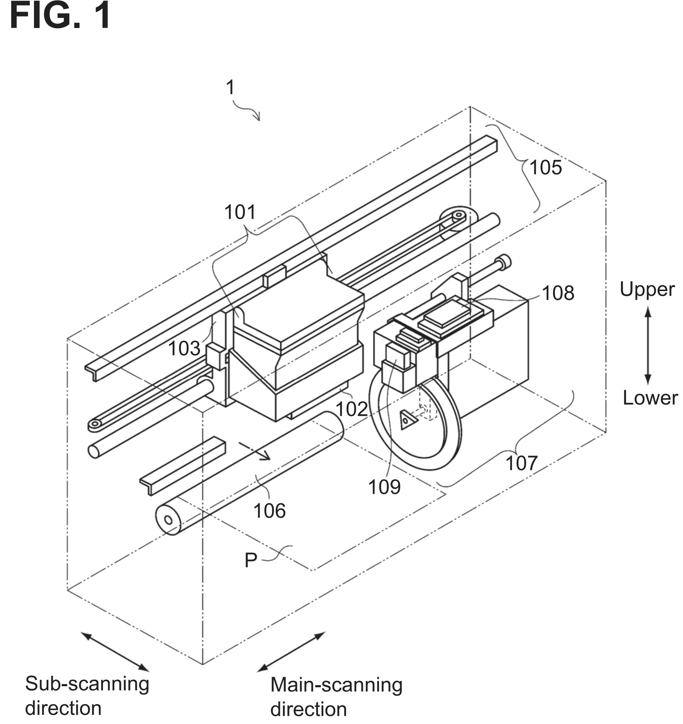

FIG. 1 shows an example configuration of the inkjet recording apparatus. As shown, an inkjet recording apparatus 1 includes an ink cartridge 101, an inkjet head 102, a carriage 103, a drive unit 105, a platen roller 106, a purge device 107, a cap 108 and a wiper member 109. Although not shown, the ink cartridge 101 and the inkjet head 102 may be connected via the ink flow path, and the aqueous ink stored in the ink cartridge 101 may be supplied to the inkjet head 102 through the ink flow path. The inkjet head 102 may eject the aqueous ink to a medium P. Examples of the medium P may include plain paper and glossy paper.

The ink cartridge 101 stores the aqueous ink. A housing of the ink cartridge 101 for storing the aqueous ink may be conventionally known.

The inkjet head 102 ejects ink toward the medium P. The ink cartridge 101 and the inkjet head 102 are mounted on the carriage 103. The drive unit 105 reciprocates the carriage 103 in the main scanning direction. During recording an image on the medium P, the inkjet head 102 ejects ink while the carriage 103 reciprocates in the main scanning direction to record on the image on the medium P. The drive unit 105 may be conventionally known (for example, see JP2008-246821 A). The platen roller 106 extends in the main scanning direction.

The purge device 107 suctions defective ink containing bubbles accumulated inside the inkjet head 102. Before the first recording, the purge device 107 suctions the filling liquid filled in the inkjet head 102 to replace the filling liquid in the inkjet head 102 with the aqueous ink. The purge device 107 may be conventionally known (for example, see JP2008-246821 A).

As shown in FIG. 1, the wiper member 109 is disposed between the purge device 107 and the platen roller 106 in the main scanning direction and is disposed adjacent to the purge device 107. The wiper member 109 is a rubber blade that wipes a nozzle surface of the inkjet head 102 as the carriage 103 moves.

In FIG. 1, the cap 108 covers the nozzles on the nozzle surface when the cap 108 contacts the nozzle surface. After recording is completed, the carriage 103 moves to a standby position where the inkjet head 102 faces the cap 108. Then, the cap 108 approaches the inkjet head 102, contacts the nozzle surface, and covers the nozzles on the nozzle surface.

While the ink cartridge 101 is mounted on the carriage 103 together with the inkjet head 102 in the ink jet recording apparatus 1, the ink cartridge 101 may be placed within the inkjet recording apparatus 1 without being mounted on the carriage 103. Specifically, the inkjet head 102 mounted on the carriage 103 may be fluidly connected to the ink cartridge 101 via the ink flow path such as a tube, whereby ink is supplied from the ink cartridge 101 to the inkjet head 102 through the tube. Instead of using the replaceable ink cartridge 101, the inkjet recording apparatus 1 may include a fixed ink tank with a filling port such that a user may insert an ink bottle into the filling port of the ink tank to replenish ink from the ink bottle to the ink tank.

The recording using the inkjet recording apparatus 1 is carried out as follows. First, the medium P is supplied from a rear or bottom of the inkjet recording apparatus 1. The medium P is conveyed to an area facing the inkjet head 102 by the platen roller 106. The image is recorded on the medium P conveyed by the platen roller 106 by ejecting the aqueous ink from the inkjet head 102. Subsequently, the medium P is discharged from the inkjet recording apparatus 1. In FIG. 1, a conveyance mechanism and a discharge mechanism up to the point where the medium P reaches the platen roller 106 are omitted.

The inkjet recording apparatus 1 shown in FIG. 1 includes a serial type of inkjet head, but it may alternatively include a line type of inkjet head. Additionally, the apparatus shown in FIG. 1 may include a roll-to-roll system where the leading edge of roll paper is wound by a winder. The serial type of inkjet head ejects the ink to record the image on the medium while reciprocating in the width direction of the medium. The line type of inkjet head is longer than the maximum width of the medium that the inkjet recording apparatus 1 is capable of recording, and the inkjet head is stable and does not reciprocate in the width direction. The inkjet recording apparatus equipped with the line type inkjet head performs recording by ejecting ink toward the medium from the inkjet head while conveying the medium.

The inkjet recording method of the present disclosure includes ejecting the aqueous ink from the inkjet head toward the medium to record an image on the medium. The inkjet recording method may be implemented using the inkjet recording apparatus of the present disclosure. The recording includes printing characters and images.

### (Examples)

Next, examples of the present disclosure will be described together with comparative examples. The present disclosure is not limited or restricted by the following examples and comparative examples.

### (Examples 1 through 10, Comparative Examples 1 through 3)

Ingredients excluding the phycocyanin as the colorant in an aqueous ink composition shown in Table 1 were uniformly mixed to obtain an ink solvent. Then, the colorant was added to the ink solvent, and the colorant and the ink solvent were mixed uniformly. A mixture with the colorant and the ink solvent (hereinafter, referred to "mixture") was filtered through a cellulose acetate-type membrane filter (pore size 3.00 µm) from TOYO ROSHI KAISHA, Ltd., to obtain aqueous inks for inkjet recording in Examples 1 through 10 and Comparative Examples 1 through 3, as shown in Table 1. In Comparative Examples 1 through 3, "Olfine^{®} E1004" and "Olfine E1010" from Nissin Chemical Industry Co., Ltd., and lecithin were used as surfactants. Table 1 shows the colorant, the surfactant, the other (water and other water-soluble organic solvents), and the content ratio (x/y) of phycocyanin (x) to surfactant (y). The other (water and other water-soluble organic solvents) is not limited only to water and other water-soluble organic solvents, and may contain the pH adjusters, the viscosity modifiers, the preservatives, the antifungal agents, and the like.

Each of the aqueous inks of Examples 1 through 10 and Comparative Examples 1 through 3 was evaluated for (a) dispersion stability, (b) ink introduction property, and (c) 1-dot line width using the methods described below.

### (a) Dispersion Stability

For each aqueous ink of Examples 1 to 10 and Comparative Examples 1 through 3, 0.4 mL of the mixture before filtration was filled in a 2×50 mm measurement cell. The cell was set in a dispersion stability analyzer LUMISIZER^{®} from LUM GmbH and centrifuged at 3000 rpm for 3 hours. The behavior was measured using a CCD line sensor at 865 nm. Based on the absorption rate per unit time, the Slope value (%/hour) was calculated. The dispersion stability was evaluated according to the criteria below.

If a dispersion of the colorant in the ink becomes unstable, aggregation of the colorant may occur, making it highly likely that ink is not ejected from the nozzles of the inkjet head. Therefore, when the dispersion stability is low, the ejection stability from the nozzles also tends to decrease. Thus, the dispersion stability is one indicator of the ejection stability.

### (Evaluation Criteria of Dispersion Stability)

A: Slope value less than 1.00
C: Slope value 1.00 or greater

### (b) Ink Introduction Property

Each aqueous ink of Examples 1 through 10 and Comparative Examples 1 through 3 was filled into an ink cartridge for the MFC-J904N inkjet printer from Brother Industries, Ltd.. After installing the ink cartridge filled with the aqueous ink into the inkjet printer, a suction was performed by a purge device to replace the filling liquid filled in the ink flow path to the aqueous ink. Subsequently, a ratio of the nozzles with good ejection to all nozzles at an initial ejection immediately after suction (hereinafter, referred to "ratio of the nozzles with good ejection") was determined. The higher the ink introduction property is, the less likely missing dots occur in printed images.

### (Evaluation Criteria of Ink Introduction Property)

A: Ratio of the nozzles with good ejection 95% or greater
B: Ratio of the nozzles with good ejection less than 95%

### (c) 1-dot Line Width

Each aqueous ink of Examples 1 through 10 and Comparative Examples 1 through 3 was filled into an ink cartridge for the MFC-J904N inkjet printer from Brother Industries, Ltd. and a 1-dot line was recorded at a resolution of 600 dpi × 300 dpi on copy paper (product name: Multi Paper Super White+, from ASKUL Corporation). A line width of the recorded 1-dot line was measured using the PIAS^{®}-II handheld image evaluation system from Quality Engineering Associates Inc. The 1-dot line width was evaluated according to the criteria below.

### (Evaluation Criteria of 1-dot Line Width)

A: 1-dot line width 70.0 µm or greater
B: 1-dot line width less than 70.0 µm

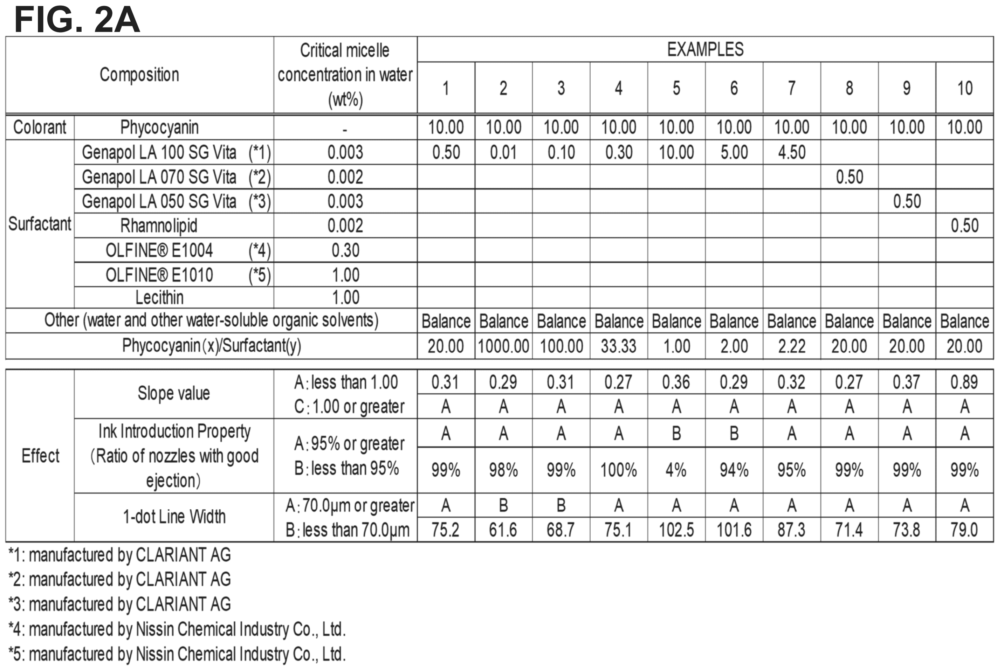

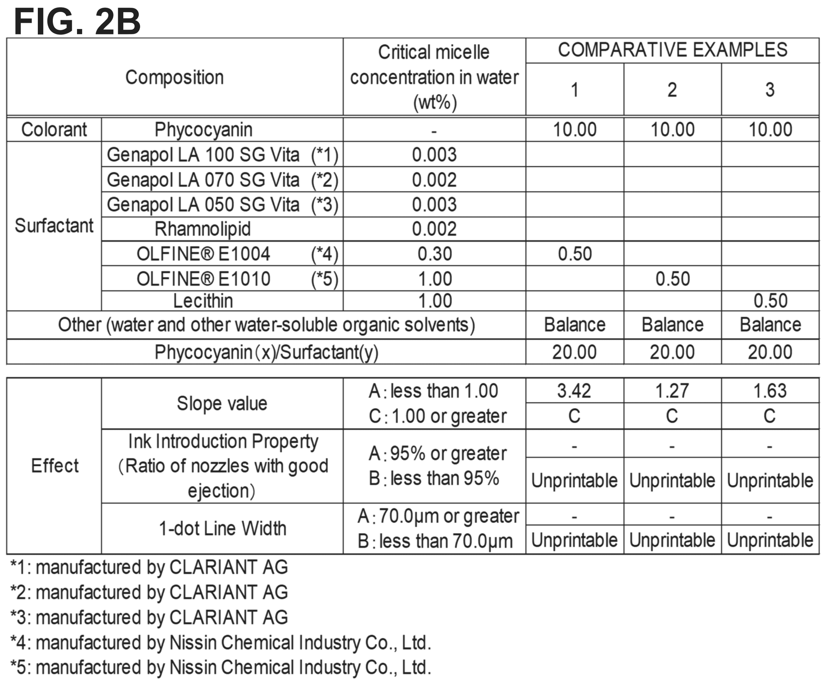

Table 1 in FIG. 2 shows aqueous ink compositions and evaluation results for Examples 1 through 10 and Comparative Examples 1 through 3.

As shown in Table 1, all the evaluation results for Examples 1 through 10 were "B" or higher. In particular, since the dispersion stability was "A" in all Examples 1 through 10, the ejection stability was found to be higher compared to Comparative Examples 1 to 3 described below.

Moreover, in Examples 1 through 10, where the content ratio (x/y) of phycocyanin (x) to surfactant (y) was 1.0 or greater and 1000.0 or less, all the evaluation results were "B" or higher. Furthermore, in Examples 1 through 4 and 6 to 10, where the content ratio (x/y) was 2.0 or greater and 1000.0 or less, the ink introduction property was 90% or greater. Additionally, in Examples 1, 4, and 7 through 10, where the content ratio (x/y) was 2.2 to 33.3, all the evaluation results were "A".

Furthermore, in Examples 1 through 4 and 6 through 10, where the surfactant content in the total weight of aqueous ink was 0.01 wt% or greater and 5.00 wt% or less, the ink introduction property was 90% or greater. Furthermore, in Examples 1, 4, and 7 to 10, where the surfactant content in the total weight of aqueous ink was 0.30 wt% or greater and 4.50 wt%, or less, all the evaluation results were "A."

On the other hand, the evaluation results of the dispersion stability were "C" and the evaluation results of the ink introduction property, and the 1-dot line width were "Unprintable" in Comparative Examples 1 through 3 of which the surfactant had the CMC in water exceeding 0.10 wt%.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

Some or all of the above-described embodiments and examples may also be described as follows, but are not limited thereto:
(1) An aqueous ink for inkjet recording comprising water, phycocyanin, and a surfactant, wherein the surfactant has a critical micelle concentration in water of 0.10 wt% or less.
(2) The aqueous ink for inkjet recording according to (1), wherein a content ratio (x/y) is 1.00 or greater and 1000.00 or less, wherein x is a content of the phycocyanin and y is a content of the surfactant.
(3) The aqueous ink for inkjet recording according to (2), wherein the content ratio (x/y) is 2.00 or greater and 1000.00 or less.
(4) The aqueous ink for inkjet recording according to (3), wherein the content ratio (x/y) is 2.22 or greater and 33.33 or less.
(5) The aqueous ink for inkjet recording according to any one of (1) through (4), wherein a content of the surfactant in the aqueous ink is 0.01 wt% or greater and 5.00 wt% or less.
(6) The aqueous ink for inkjet recording according to (5), wherein the content of the surfactant in the aqueous ink is 0.30 wt% or greater and 4.50 wt% or less.
(7) The aqueous ink for inkjet recording according to (1), wherein a content ratio (x/y) is 2.00 or greater and 1000.00 or less, wherein a content of the surfactant in the aqueous ink is 0.30 wt% or greater and 4.50 wt% or less, and wherein x is a content of the phycocyanin and y is a content of the surfactant.
(8) An inkjet recording apparatus comprising an inkjet head, wherein the inkjet head is configured to eject the aqueous ink according to any one of (1) through (7) toward a medium.
(9) An inkjet recording method comprising ejecting the aqueous ink according to any one of (1) through (7) from an inkjet head toward a medium to record an image on the medium.

### INDUSTRIAL APPLICABILITY

As described above, according to the present disclosure, it is possible to provide the aqueous ink using phycocyanin as the colorant and exhibits excellent ejection stability from the plurality of nozzles. The aqueous ink, the inkjet recording apparatus, and the inkjet recording method of the present disclosure are widely applicable, for example, to variety of kinds of the inkjet recording on various media.

## Claims

1. An aqueous ink for inkjet recording comprising water, phycocyanin, and a surfactant, wherein the surfactant has a critical micelle concentration in water of 0.10 wt% or less.

2. The aqueous ink for inkjet recording according to claim 1,
wherein a content ratio (x/y) is 1.00 or greater and 1000.00 or less, and
wherein x is a content of the phycocyanin and y is a content of the surfactant.

3. The aqueous ink for inkjet recording according to claim 2,
wherein the content ratio (x/y) is 2.00 or greater and 1000.00 or less.

4. The aqueous ink for inkjet recording according to claim 3,
wherein the content ratio (x/y) is 2.22 or greater and 33.33 or less.

5. The aqueous ink for inkjet recording according to any one of claims 1 through 4,
wherein a content of the surfactant in the aqueous ink is 0.01 wt% or greater and 5.00 wt% or less.

6. The aqueous ink for inkjet recording according to claim 5,
wherein the content of the surfactant in the aqueous ink is 0.30 wt% or greater and 4.50 wt% or less.

7. The aqueous ink for inkjet recording according to claim 1,
wherein a content ratio (x/y) is 2.00 or greater and 1000.00 or less, and
a content of the surfactant in the aqueous ink is 0.30 wt% or greater and 4.50 wt% or less,
wherein x is a content of the phycocyanin and y is a content of the surfactant.

8. An inkjet recording apparatus comprising an inkjet head (102),
wherein the inkjet head (102) is configured to eject the aqueous ink according to any one of claims 1 through 7 toward a medium.

9. An inkjet recording method comprising,
ejecting the aqueous ink according to any one of claims 1 through 7 from an inkjet head (102) toward a medium to record an image on the medium.
